# EUROPEAN PATENT APPLICATION

(11) **EP 4 837 472 A1**
(43) Date of publication of application: **11.11.2026**
(21) Application number: 26177723.9
(22) Date of filing: 08.05.2026
(51) Int. Cl.: A47J 37/06

(54) **TEPPANYAKI GRILL PLATE**

(30) Priority: 08.05.2025 SE 2530270
(71) Applicant: Ericson, Peter, 11635 Stockholm (SE)
(72) Inventor: Ericson, Peter, 11635 Stockholm (SE)

(57) **Abstract**

A fast-heating teppanyaki plate designed for application on grills, gas, and induction hobs is disclosed. The provided arrangement incorporates a large cooking surface that allows common or two or more separate heating zones. In an embodiment, the teppanyaki plate comprises integrated handles for catching and leading grease stains to a circumferential grease gutter without limiting cooking surface access. Such inclined grease gutters provide self-drainage to a grease trap, thus preventing grease and oil buildup and facilitates ease of cleaning. The disclosed teppanyaki grill plate mitigates warping and overheating through convection airflow. The teppanyaki grill plate may be manufactured in single material ferromagnetic stainless steel or in multi-layer using different metal alloys to provide durability optimal heat distribution. This design enhances cooking efficiency, maintenance, and versatility for both home and commercial use.

## Description

### TECHNICAL FIELD

The technology disclosed herein relates generally to the field of griddle plates, and in particular to mobile griddle plates for cooking, the mobile griddle plates being arranged to leverage heating from gas, grill, and induction hobs.

### BACKGROUND

Mobile domestic and commercial griddle plates and grill plates have become popular for indoor and outdoor cooking owing to the versatility of cooking techniques that may be used without a permanent stove installation. A drawback with known prior art is that the plates degrade and blacken over time making cleaning and maintenance difficult. Another drawback is that the plates require a long heating time as well as a long cooling down time. Still another drawback is that conventional plates may warp due to uneven heat distribution or overheat in specific areas. This reduces their effectiveness and lifespan. Yet another drawback is that the conventional induction hob grill plates often are designed as oven pans with protruding side walls, which reduces the available cooking area. This form factor has a drawback in that grease or fat used for cooking builds up evenly at the bottom of the pan and eventually boils the food in oil. This in turn creates a burned taste unless the oil is poured out and the surface is cleaned, which is time consuming.

A prior art griddle or plate is known, that has a grease container underneath the griddle or plate. This increases their height at the cost of creating uneven heating since the heat transfer from the heat source is blocked. The prior art mobile grill plates further have a design flaw in that they are designed to be moved around like a frying pan on the stove or between the stove and into an oven. A grill plate is rarely moved during actual cooking since the Teppanyaki technique is to move the food around onto different heat zones for later assembly into different dishes, for example, a fried rice with shrimp, egg, and vegetables. Further, the known mobile grill plates are often made such as to enable easy mobility and are therefore provided with large, fixed handles to reduce the heat in the handles during transport which increases weight, ease of cleaning and limits access to all parts of the cooking area.

Prior- known mobile- or portable grill plates are also rather small-sized, which is a great advantage in ease of moving it to and from the heat source or transporting the plate to the table. However, this also reduces the amount of food that can be cooked simultaneously. Further yet, the small area of the current grill plates renders the simultaneous cooking of several types of food, such as fish, vegetables, meat etc., difficult.

### SUMMARY OF THE INVENTION

The objective of the present disclosure is to address and improve various aspects of mobile griddle plates. A particular objective is to provide a teppanyaki grill plate 1 which allows for a large cooking surface with distinct heat zones, which teppanyaki grill plate **1** can be used on top of gas, grill, as well as induction hobs. This objective and others are achieved by a teppanyaki grill plate **1** as defined in claim 1. More particularly, a teppanyaki grill plate **1** as disclosed herein, comprises a planar main body constituting a cooking surface, the planar main body also comprising integrated handles. The planar main body further comprises a circumferential grease gutter arranged to receive oil used during cooking. The grease gutter is arranged to transport the oil to a grease trap, which may be a container for oil, food scraped during cooking etc. The bottom part is arranged such that it provides an air gap between the underside of the planar main body and a heat source used.

The objectives are, according to an aspect, achieved by the provided circumferential grease gutters, which provide a self-drainage into a grease trap that may be sized to manage excess oils, scraped food. This is an advantage in that it prevents any buildup of grease and/or burnt food on the surface during cooking. In other embodiments, the grease trap is made detachable and/or is enabled to transport the grease to a separate container. This provides further options in terms of filtering and re-use of oil as well as easier cleaning.

The objectives are, according to yet another aspect, achieved by the provided integrated handles that can be shaped to serve multiple purposes, such as e.g., catching oil stains during cooking and leveling the teppanyaki grill plate **1** horizontally. The integrated handles further have the advantage that they do not limit access to the cooking surface and can be used for transport of the teppanyaki grill plate **1.** In other embodiments, the integrated handles are detachable and not heat absorbing. This has the advantage of providing additional options, such as moving the teppanyaki grill plate **1** onto a dinner table for shared eating, while still allowing for easy storage and cooking surface access.

The objectives are, according to still another aspect, achieved by the teppanyaki grill plate **1** being arranged with a bottom surface that is elevated above the heat source, whereby the teppanyaki grill plate 1 stands firmly on the integrated handles. This is advantageous in that it creates a natural space for airflow, thus preventing overheating.

The objectives are, according to yet another aspect, achieved by the bottom of the teppanyaki grill plate 1 being arranged to add geometric vertical and horizontal shapes which have the advantage of efficiently distributing force loads and counter sheet warping due to thermal expansion during heating followed by thermal stress during cooling. The bottom of the surface may further comprise heat sensors arranged in a grid pattern. In other embodiments, the heat sensors may be arranged within the bottom. These embodiments have the advantage that temperatures may be controlled such as avoiding overheating, which could otherwise damage the teppanyaki grill plate 1 and/or burn the food.

The teppanyaki grill plate 1 may be manufactured in varied sizes and material thickness. This is advantageous to fit varied sizes of heating sources for residential and commercial use.

The manufacturing process of the teppanyaki grill plate 1 may use different techniques, including metal sheet pressing, casting, milling, and 3D-printing that is advantageous to allow the use of varied materials with the lowest manufacturing cost and CO₂ footprint.

The teppanyaki grill plate 1 is made from materials that may include one or more of the following: monolithic ferromagnetic steel or a multilayer configuration combining stainless steel and metal alloys. This is advantageous to ensure thermal conductivity and mechanical strength even for a large cooking surface.

Typically, the surface of the here mentioned teppanyaki grill plate **1** goes through deburring, polishing, acid passivation, and electropolishing that has the advantages that it creates a "non-stick" cooking surface that also is less prone to corrosion and is dishwasher safe.

Alternatively in some embodiments the teppanyaki grill plate **1** has removable accessories that allow for the use of scrapers, spatulas, brushes, food heat probes, dividers to separate food, steam domes with smoke gun ports to infuse food with flavor during the cooking process. This is advantageous in cooking diverse types of food at the same time but also leveraging the latest cooking techniques.

### BRIEF DESCRIPTION OF THE DRAWINGS

**Fig. 1** is a perspective view of the teppanyaki grill plate **1.**

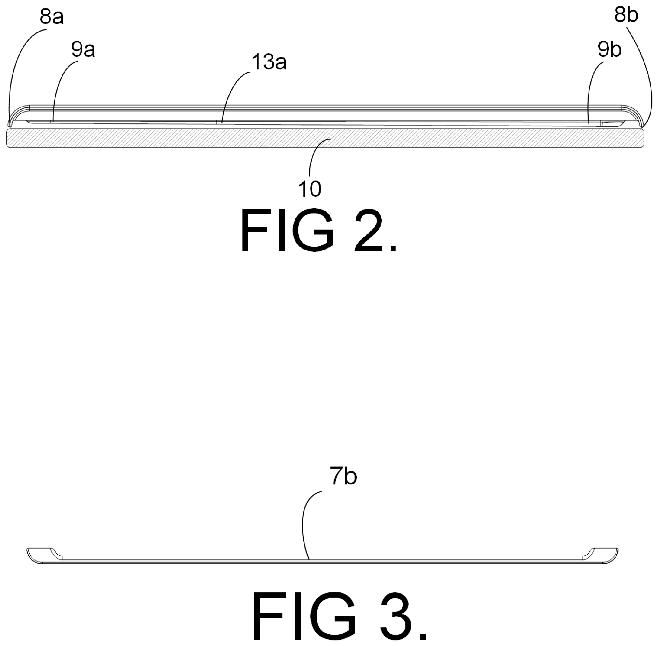

**Fig. 2** is a side view of the teppanyaki grill plate **1** as seen from the handle.
**Fig. 3** is a back side facing view of the teppanyaki grill plate **1.**

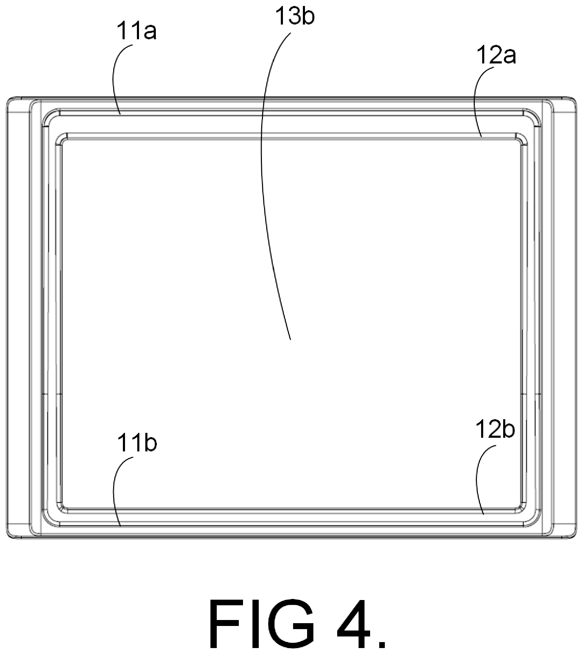

**Fig. 4** is a bottom flat view of the teppanyaki grill plate **1.**
**Fig. 5** is a perspective view of an alternative embodiment of the teppanyaki grill plate **1** due to change in size.

### DETAILED DESCRIPTION

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

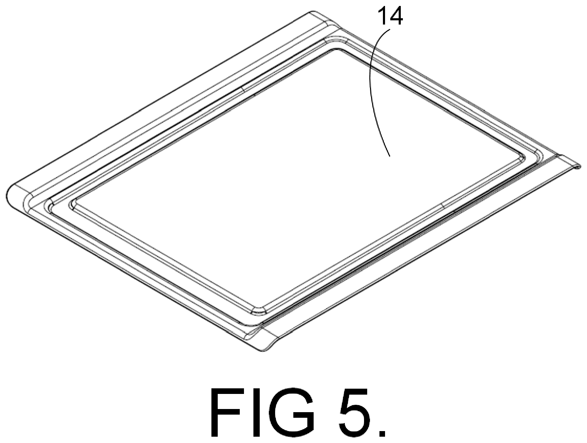

The teppanyaki grill plate **1** is preferably fabricated with a steel metal pressing and bonding using either monolithic material, such as ferromagnetic stainless steel (EN 1.4016), or a multilayer construction in combination with aluminum. It is, however, noted that other materials may be used such as, for instance, different metal alloys. It is also noted, the manufacturing may be done in diverse ways, for instance, by casting, by Computer Numerical Control (CNC) milling and/or by metal 3D-printing. The teppanyaki grill plate **1** may be manufactured in many varied sizes as illustrated in **Figure 5** so as to fit different heat sources having a fixed height Y and a variable length X. This is accomplished while still keeping its other properties while changing the area of the cooking surface **14.**

In some embodiments, during the manufacturing process, metal forming simulation software is preferably used to engineer, evaluate, and improve the shape of the metal forming. The software may be based on detailed CAD-drawings of the teppanyaki grill plate **1,** for instance combined with data sheets of metal manufacturers. Such approach is advantageous in order to find any issues related to, for instance, splits, wrinkles, thinning and/or thermal expansion due to various issues, such as for example, the thickness of the metal and the geometrical design properties of the teppanyaki grill plate **1.** The software may also aid in creating designs, such as die face-, casting-, CNC-milling-, and 3D-printing designs. Further, the software may also use compensating tools for behavior of geometry-based steel properties during manufacturing.

Post metal pressing may, in an exemplary embodiment, comprises the teppanyaki grill plate **1** going through deburring, polishing, acid passivation followed by electropolishing. Electropolishing is an electrochemical process step where the teppanyaki grill plate **1** is dipped in a specific electrofishing medium, and an electric current anodically dissolves microscopic irregularities of the surface, creating a fine surface smoothness with metallic purity to enhance the lifetime of the teppanyaki grill plate **1.**

Such electropolishing also enhances corrosion resistance and reduces the surface's adhesion. If the stainless-steel teppanyaki grill plate 1 is properly preheated, the cooking oil will more easily form a thin barrier between the food and the cooking surface where the Leidenfrost effect creates a natural "non-stick" surface. This reduces the amount of cooking oil needed, makes the food healthier and increases durability even under extensive usage.

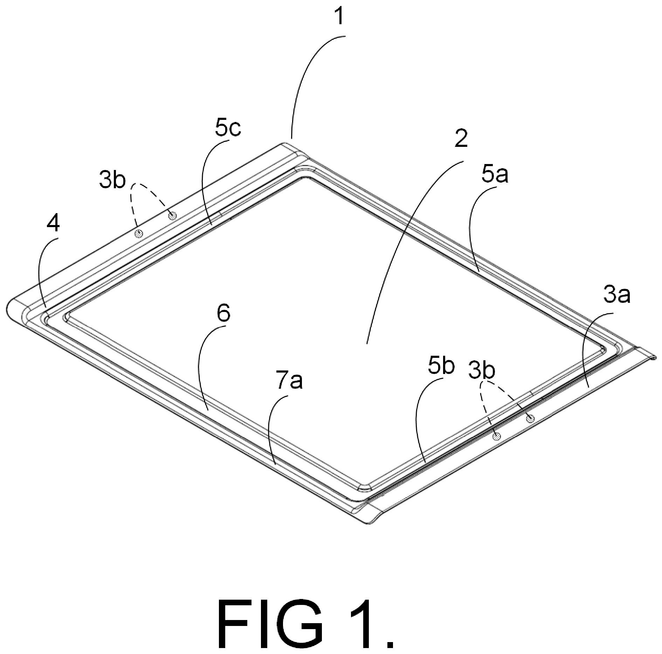

**Figure 1** illustrates an embodiment of the disclosed teppanyaki grill plate **1.** The teppanyaki plate 1 is preferably a one-piece design since this provides flexibility for use on various heating surfaces **10.** The integrated handles **3a, 3b** serve multiple purposes, including catching oil stains during cooking **4,** leveling the teppanyaki grill plate **1** horizontally by standing on the frontal curved edge **8a** and back curved edge **8b.** In the embodiment wherein the disclosed teppanyaki grill plate **1** is elevated it also creates an airflow space under the cooking surface **2** that enables the prevention of overheating and also allows for easy transport of the teppanyaki grill plate **1.** The front metal panel **7a** and the back metal panel **7b** allows food to be cooked on the entire cooking surface **2** by having a low completely flat access angle from the front all the way to the back of the cooking surface **2.** This while the food is still easily accessed and moved around with a spatula or other kitchen tool.

In various embodiments, the teppanyaki grill plate **1** comprises side grease gutters **5a, 5b, 5c** arranged along the sides thereof. The grease gutters 5a, 5b, 5c provide drainage means, such that oil and grease from the cooking surface can be gotten rid of. The grease gutters 5a, 5b, 5c may also be advantageous for additional purposes such as, for instance, acting as edge support for the cooking surface 2 and for visually define the cooking surface **2** with a clear boundary. One form of the grease gutter is, in an exemplary embodiment, a box gutter with soft-edged corners. This exemplary type of grease gutter gives the best possible flow and also reduces any build-up of oil owing to a larger surface area compared to, for instance, a semicircular U-shape. Further, such soft corner edges are also easier to clean as compared to a 90-degree angle box shape, this since any build up easier sticks to sharp corners. The grease gutters 5a, 5b, 5c may be provided with an angled self-drainage such as direct gravy and oil to a front grease trap **6.** The angle of the self-drainage may be chosen such as to reduce the height of the teppanyaki grill plate **1** but still allow for a flow of oil. An angle increase of 1% would raise the height of the teppanyaki grill plate **1** by 1 cm with a meter long gutter. The front grease trap **6** may hold oil and store burnt food scraped from the surface during cooking. Further, excess oil in the grease trap **6** may easily be scooped up for filtering and reused.

The bottom front facing **7a** and the bottom back facing **7b** metal panel across the length of the entire teppanyaki grill plate **1,** together with the circumferential outer **11a, 11b** and inner **12a, 12b** radius grease gutters are designed to add additional geometric vertical and horizontal shapes which efficiently distribute force loads and counter sheet warping due to heat differences.

The large cooking area, combined with the grease angled self-drainage gutters **5a, 5b, 5c,** allows for cooking multiple types of food simultaneously with different cooking techniques such as frying, steaming, and smoking under steam domes with smoke gun ports. The teppanyaki grill plate 1 size also accommodates cooking larger quantities of the same food. The entire teppanyaki grill plate **1** is dishwasher safe and compatible with removable accessories that allow for the use of scrapers, spatulas, seasoning brushes and dividers to separate proteins, vegetables, or dietary zones. The large cooking area also uses the latest induction hubs that have flexible cooking zones to create different temperature zones.

The teppanyaki plate 1 disclosed herein is highly suitable for residential as well as commercial cooking applications. It may be used in kitchens, restaurants, outdoor grilling environments, and food service operations wherein efficient and hygienic flat-surface cooking are required. The design ensures long service life, easy cleaning, and compatibility with a variety of heating technologies. The teppanyaki grill plate 1 compact and sleek design therefore enhances both its durability as well as its usability.

The invention has been described with reference to a few embodiments. However, as appreciated by a person skilled in the art, other embodiments than the particular one disclosed herein are equally possible within the scope of the invention, as defined by the appended patent claims.

## Claims

1. A teppanyaki grill plate **(1)** comprising:
• a planar main body **(2)** constituting a cooking surface, the planar main body **(2)** comprising integrated handles **(3a)**
• the planar main body **(2)** further comprising a circumferential grease gutter **(5a, 5b, 5c)** arranged to receive oil used during cooking,
• the grease gutter **(5a, 5b, 5c)** being arranged to transport the oil to a grease trap **(6),** the grease trap **(6)** being a container for one or both of: oil and food scraped during cooking. The teppanyaki grill plate **(1)** further comprising one or more circumferential curved grease gutters **(5a, 5b, 5c)** arranged on the planar main body **(2)** with angled self-drainage **(9a, 9b)** at an angle less than 5% to lead and direct gravy and oil to a grease trap **(6),**
• a bottom part **(13a, 13b)** arranged with a frontal curved edge **8a** and a back curved edge **8b** to provide an air gap between the underside of the planar main body **(2)** and a heat source **(10),** thereby creating a thermal gradient and convection airflow for cooling of the teppanyaki grill plate **(1).**

2. The teppanyaki grill plate (1) as claimed in claim 1, wherein the integrated handles **(3a, 3b)** are configured to enable at least one of: ease mobility of the teppanyaki grill plate by allowing a firm grip below the handles **(3a, 3b),** a curved slope side wall **(4)** with a circular radius to catch oil stains and lead the oil to the grease gutters **(5a, 5b, 5c),** and level the teppanyaki grill plate horizontally **(8a, 8b)** on flat surfaces.

3. The teppanyaki grill plate **(1)** as claimed in any of the preceding claims, wherein the integrated handles **(3a)** also comprise additional detachable handles **(3b)** that are attached to the main planar body **(2).**

4. The teppanyaki grill plate **(1)** as claimed in any of the preceding claims, wherein the grease trap **(6)** is configured to collect oil from the grease gutters **(5a, 5b, 5c)** and to allow temporary storage for burnt food and/or oil scraped from the cooking surface during cooking, enabling excess oil to be scooped up for filtering and reuse.

5. The teppanyaki grill plate (1) as claimed in any of the preceding claims, wherein the material is selected among one or more of the following:
• Stainless steel (EN 1.4016).
• EN 1.4301 stainless steel.
• EN AW-3003 N aluminum to be used in a multi-layer material approach for the core of the teppanyaki grill plate,
• AW-1050A pure aluminum to be used in a multi-layer material approach for the core of the teppanyaki grill plate.
